# EUROPÄISCHE PATENTSCHRIFT

(11) **EP 1 137 504 B1**
(45) Veröffentlichungstag und Bekanntmachung des Hinweises auf die Patenterteilung: **26.03.2003**
(21) Anmeldenummer: 99960926.6
(22) Anmeldetag: 16.11.1999
(51) Int. Cl.: B22F 3/105, B23K 26/00, B29C 67/00

(54) **PROZESSKAMMER FÜR DAS SELEKTIVE LASER-SCHMELZEN**
PROCESS CHAMBER FOR SELECTIVE LASER FUSION
CHAMBRE DE PROCESSUS POUR LA FUSION SELECTIVE PAR LASER

(30) Priorität: 23.11.1998 DE 19853947
(43) Veröffentlichungstag der Anmeldung: 04.10.2001
(73) Patentinhaber: FRAUNHOFER-GESELLSCHAFT ZUR FÖRDERUNG DER ANGEWANDTEN FORSCHUNG E.V., 80636 München (DE)
(72) Erfinder: MEINERS, Wilhelm, D-52072 Aachen (DE); WISSENBACH, Konrad, D-52134 Herzogenrath (DE); GASSER, Andres, D-52066 Aachen (DE)
(74) Vertreter: Gagel, Roland, Dr.
(86) Internationale Anmeldenummer: DE9903670
(87) Internationale Veröffentlichungsnummer: WO00030789

(56) Entgegenhaltungen:
- EP-A- 0 289 116
- DE-C- 19 649 865
- US-A- 5 837 960
- MAAREN A J P ET AL: "A HIGH VACUUM SYSTEM FOR LASER INDUCED DEPOSITION OF TUNGSTEN" JOURNAL OF VACUUM SCIENCE AND TECHNOLOGY: PART B,US,AMERICAN INSTITUTE OF PHYSICS. NEW YORK, Bd. 9, Nr. 1, 1. Januar 1991 (1991-01-01), Seiten 89-94, XP000176191 ISSN: 0734-211X

## Beschreibung

Die Erfindung betrifft eine Prozeßkammer für das selektive Laser-Schmelzen von Werkstoffpulver zur Herstellung von Formkörpern, beispielsweise Prototypen von Bauteilen.

Die vorliegende Erfindung bezieht sich auf eine Technik, die unter dem Namen Rapid Prototyping bekannt ist. Rapid Prototyping-Verfahren werden in der Produktentwicklung eingesetzt, um die Produktentwicklungszeit zu verkürzen sowie die Produktqualität zu steigern. Dies wird dadurch ermöglicht, daß mittels der Rapid Prototyping-Verfahren Prototypen sehr schnell direkt aus dem 3D CAD Modell hergestellt werden können. Die bisher erforderliche zeitaufwendige Erstellung eines NC-Programms für eine Fräs- oder Erodierbearbeitung oder die Herstellung formgebender Werkzeuge entfällt.

Die Entwicklung neuer bzw. die Weiterentwicklung bestehender Rapid Prototyping-Verfahren hat das Ziel, möglichst seriennahe oder sogar serienidentische Werkstoffe verarbeiten zu können. Dies gilt vor allem für metallische Prototypen oder Prototypwerkzeuge. Ein bekanntes Verfahren des selektiven Laser-Schmelzens ermöglicht die Herstellung von Bauteilen aus handelsüblichen Stählen. Die Bauteile werden, wie bei allen Rapid Prototyping-Verfahren, schichtweise hergestellt. Dazu wird der Werkstoff in Pulverform jeweils als dünne Schicht auf eine Bauplattform aufgebracht. Das Pulver wird lokal, entsprechend der Bauteilgeometrie der zu bearbeitenden Schicht, mit einem Laserstrahl aufgeschmolzen. Die mit diesem Verfahren hergestellten Bauteile aus Stahl (z.B. aus Edelstahl 1.4404) erreichen bzgl. ihrer Dichte und Festigkeit die angegebenen Werkstoffspezifikationen. Damit können sie als Funktionsprototypen oder direkt als fertiges Bauteil eingesetzt werden.

Ein bekanntes Rapid Prototyping-Verfahren zur Herstellung metallischer Bauteile aus einem pulverförmigen Werkstoff ist auch das sog. Selective Laser Sintering. Damit wird ein metallisches Bauteil hergestellt, indem ebenfalls jede Pulverschicht lokal mit einem Laserstrahl bearbeitet wird. Allerdings werden bei diesem Verfahren spezielle Mehrkomponenten-Pulversysteme verwendet. Bei der Bearbeitung wird nicht das gesamte Pulver vollständig aufgeschmolzen, sondern lediglich eine Komponente des Pulversystems. Diese Komponente dient als Binder für die in der festen Phase verbleibende Komponente. Hierbei werden beispielsweise niedrigschmelzende Metalle als Binderkomponenten beigemischt oder ein mit Kunststoff umhülltes Metall eingesetzt, bei dem der Kunststoff als Binder dient.

Der Nachteil der bei diesem Verfahren eingesetzten Anlagen ist jedoch, daß damit, insbesondere aufgrund der Gestaltung der Prozeßkammer, kein handelsüblicher einkomponentiger Pulverwerkstoff, wie z.B. Edelstahl 1.4404 so verarbeitet werden kann, daß ein Bauteil mit einer Dichte von > 98% herstellbar ist.

In der DE 196 49 865 C1 wird ein Verfahren vorgeschlagen, bei dem ein bindemittel- und flußmittelfreies metallisches Werkstoffpulver auf die Bauplattform aufgebracht und durch den Laserstrahl entsprechend der Bauteilgeometrie auf Schmelztemperatur erhitzt wird. Die Energie des Laserstrahls wird so gewählt, daß das metallische Werkstoffpulver an der Auftreffstelle des Laserstrahls über seine gesamte Schichtdicke vollständig aufgeschmolzen wird. Der Laserstrahl wird bei diesem Verfahren in mehreren Spuren derart über den vorgegebenen Bereich der jeweiligen Werkstoffpulverschicht geführt, daß jede folgende Spur des Laserstrahls die vorherige Spur teilweise überlappt. Gleichzeitig wird eine Schutzgasatmosphäre über jeder Wechselwirkungszone des Laserstrahls mit dem metallischen Werkstoffpulver aufrechterhalten, um Fehlstellen zu vermeiden, die beispielsweise durch Oxidation hervorgerufen werden können.

Die dazugehörige Vorrichtung umfaßt hierbei eine flache, quaderförmige Prozeßkammer mit einem Schutzgas-Einlaß, der im Bereich der oberen Seitenkante der Prozeßkammer angeordnet ist, sowie einem Schutzgas-Auslaß an der gegenüberliegenden Kante, der im Bereich der Bodenfläche der Prozeßkammer angeordnet ist. In der Bodenfläche der Prozeßkammer sind ein Vorratsbehälter, der mit metallischem Werkstoffpulver gefüllt ist, sowie eine Aufbaukammer vorgesehen. In beiden ist jeweils ein über einen Hubkolben angetriebener Hubtisch enthalten. Oberhalb der Prozeßkammer im Bereich der Aufbaukammer ist eine Abtasteinrichtung vorgesehen, die einen von einem Laser erzeugten Laserstrahl auf den Hubtisch mit der Bauplattform richtet. Der Laserstrahl wird hierbei durch ein als transparente Fläche in der Oberseite der Prozeßkammer ausgestaltetes Einkoppelfenster eingekoppelt.

Zur Herstellung der Bauteile ist die Auslegung der Prozeßkammer von entscheidender Bedeutung. So ergeben sich bei der oben dargestellten Prozeßkammer Probleme durch Verschmutzung der transparenten Fläche, die zu Verlusten bei der Einkopplung der Laserstrahlung führt. Diese Verschmutzung resultiert in erster Linie aus Material, das beim Auftreffen des Laserstrahls auf die Bearbeitungsfläche verdampft und sich an der transparenten Fläche niederschlägt.

Die Aufgabe der vorliegenden Erfindung besteht darin, eine Prozeßkammer anzugeben, in der die Herstellung von Bauteilen hoher Dichte auch bei längerer Fertigungszeit ohne Verschmutzung des Einkoppelfensters ermöglicht wird.

Die Aufgabe wird mit der Prozeßkammer gemäß Anspruch 1 gelöst. Vorteilhafte Ausgestaltungen der Prozeßkammer sind Gegenstand der Unteransprüche.

Für die Herstellung von Bauteilen hoher Dichte ist der Einsatz einer Prozeßkammer von großer Bedeutung.

Die erfindungsgemäße Prozeßkammer stellt eine geschlossene Kammer mit einer Bodenfläche, Seitenwänden und einer Deckfläche, einem Vorratsvolumen und einem Aufbauvolumen, die in der Bodenfläche vorgesehen sind, im Bereich der Seitenwände angeordneten ersten Einlaßund Auslaßöffnungen für ein Schutzgas und einem für einzukoppelnde Laserstrahlung transparenten Einkoppelfenster dar. Die Besonderheit der Prozeßkammer besteht darin, daß in der Deckfläche über dem Aufbauvolumen ein erhöhter Bereich mit Seitenflächen vorgesehen ist, in dem das Einkoppelfenster angeordnet ist, wobei in den Seitenflächen des erhöhten Bereiches zweite Einlaßöffnungen für ein zweites Gas vorgesehen sind.

Beim Betrieb der Prozeßkammer für das selektive Laser-Schmelzen wird ein zweites Gas durch die zweiten Einlaßöffnungen eingeleitet, das eine geringere Dichte als das durch die ersten Einlaßöffnungen eingeleitete Schutzgas aufweist. Dadurch bildet sich innerhalb des erhöhten Bereiches eine Art Puffervolumen des leichteren zweiten Gases, durch das in der Bearbeitungszone entstehende Dämpfe wirksam vom Einkoppelfenster abgehalten werden. Gleichzeitig wird die für die Herstellung von Bauteilen hoher Dichte erforderliche Schutzgasströmung über der Bearbeitungsfläche durch diese Maßnahme nicht gestört.

Die erfindungsgemäße Gestaltung der Prozeßkammer ermöglicht daher die Verarbeitung handelsüblicher, einkomponentiger Pulverwerkstoffe nach dem Prinzip des selektiven Laser-Schmelzens zur Herstellung von Bauteilen mit einer Dichte von > 98%.

Zur Vermeidung der Oxidation der metallischen Schmelze durch den Luftsauerstoff ist es erforderlich, in der Wechselwirkungszone eine inerte Schutzgasatmosphäre aufrechtzuerhalten. Als Schutzgas kann zum Beispiel Argon verwendet werden. Dazu sollte der Prozeß in einer geschlossenen Kammer durchgeführt werden, in der eine Schutzgasatmosphäre erzeugt werden kann.

Gleichzeitig ist es notwendig, daß das Gas über der Wechselwirkungszone strömt, damit aus der Wechselwirkungszone aufsteigende gasförmige Bestandteile sofort von der Strömung erfaßt und abtransportiert werden. Außerdem muß das Einkoppelfenster, durch das die Laserstrahlung in die geschlossene Prozeßkammer eintritt, vor Verschmutzung durch die aufsteigenden gasförmigen Bestandteile geschützt werden. Durch die erfindungsgemäße Gestaltung der Prozeßkammer werden diese Anforderungen erfüllt.

Die erfindungsgemäße Gestaltung der Prozeßkammer ermöglicht somit den wirksamen Schutz des Einkoppelfensters vor Verschmutzung durch aus der Wechselwirkungszone aufsteigende gasförmige Bestandteile, ohne eine effektive Schutzgas-Führung, die für den Prozeß von besonderer Bedeutung ist, zu beeinträchtigen. Dadurch gelingt es, Bauteile mit einer Dichte von > 98% durch vollständiges Aufschmelzen von handelsüblichem Metallpulver mit einem Laserstrahl herzustellen.

Die Erfindung wird nachfolgend anhand des Ausführungsbeispiels in Verbindung mit den Zeichnungen nochmals erläutert. Hierbei zeigen
- Figur 1: schematisch ein Beispiel für eine Ausgestaltung der erfindungsgemäßen Prozeßkammer in Seitenansicht; und
- Figur 2: die Prozeßkammer aus Figur 1 in Aufsicht.

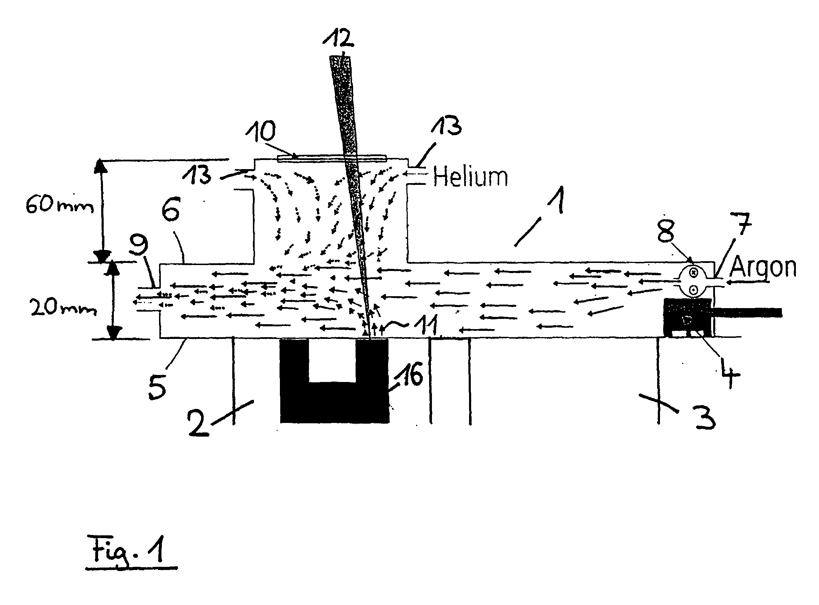

Im vorliegenden Beispiel gemäß Figur 1 besteht die Prozeßkammer 1 aus zwei Zylindern, dem Bauzylinder 2 und dem Pulvervorratszylinder 3. Zur Beschichtung des Bauraums mit einer neuen Pulverschicht wird mittels Linearachsen der Kolben des Bauzylinders 2 (mit dem Bauteil 16) um die entsprechende Schichtdicke abgesenkt und der Kolben des Pulvervorratzylinders 3 um die ca. 1,5-fache Strecke angehoben.

Als Nivelliersystem wird ein Schieber 4 verwendet, der in einer Linearbewegung das Pulver (nicht dargestellt) vom Pulverzylinder 3 auf den Bauzylinder 2 schiebt.

Die Prozeßkammer 1 ist geschlossen ausgeführt und wird mit einem Schutzgas durchströmt (lange Pfeile). Um eine effektive Schutzgasströmung in der Bearbeitungszone zu erreichen, wird die Prozeßkammer sehr flach ausgelegt. Der Abstand zwischen Bauebene 5 und Kammerdeckel 6 beträgt im vorliegenden Beispiel nur 20 mm. Dies wird dadurch ermöglicht, daß der Antrieb des Schiebers 4 außerhalb der Prozeßkammer angebracht wird. Die Bewegung des Antriebs wird durch Stangen, die durch die Seitenwand der Kammer geführt werden, auf den Schieber übertragen. Der Schieber wird innerhalb der Kammer beidseitig auf Flachstahlschienen geführt. Die am Schieber angebrachten Gleitelemente sind aus Teflon gefertigt. Die Höhe des Schiebers beträgt 10 mm. Der Schieber wird aus einem nichtmagnetischen Werkstoff gefertigt, um das Anhaften von magnetischen Pulverwerkstoffen zu vermeiden.

Oberhalb des Schiebers 4 befindet sich der Einlaß 7 für das Schutzgas, das durch einen Verteiler 8 über die gesamte Breite der Kammer einströmt. Der Verteiler 8 ist ein Rohr mit kreisförmigem Querschnitt. An der zum Kammerinneren zugewandten Seite des Rohrs befinden sich kleine Löcher im Abstand von 10 mm. Der Durchmesser der Löcher ist so gestaltet, daß die Summe der Querschnittsflächen der Löcher gleich der Querschnittsfläche des Rohres ist. Damit ist gewährleistet, daß das in das Verteilerrohr einströmende Gas gleichverteilt durch alle kleinen Löcher in die Prozeßkammer einströmt.

Die Auslaßöffnungen 9 für das Schutzgas befinden sich an der gegenüberliegenden Seite der Kammer. Dadurch strömt das Schutzgas in einem Kanal von einer Höhe von 20 mm über die Bearbeitungsebene, wie durch die langen Pfeile in Figur 1 angedeutet.

Im Bereich des Bauzylinders 2 ist der Kammerdeckel 6 mit einem für die Laserstrahlung transparenten Einkoppelfenster 10 versehen. Das Einkoppelfenster 10 hat einen größeren Abstand zur Bauebene 5, da es vor Verschmutzung durch Dämpfe 11 (kurze durchgezogene Pfeile) und Spritzer, die bei der Bearbeitung mit dem Laserstrahl 12 entstehen, geschützt werden muß. Deshalb ist der Kammerdeckel 6 im Bereich des Einkoppelfensters 10 im vorliegenden Beispiel um 60 mm erhöht. Um dennoch die Schutzgasströmung in diesem Bereich aufrecht zu erhalten, wird ein zweiter Gasstrom (durch gepunktete Pfeile angedeutet) direkt unterhalb des Einkoppelfensters 10 über Einlaßöffnungen 13 ringförmig in die Kammer 1 eingeleitet. Das von oben einströmende Gas hat eine geringere Dichte als das seitlich zugeführte Gas. Das leichtere Gas füllt den erhöhten Bereich der Kammer. Dadurch verbleiben sowohl die Dämpfe als auch das schwerere Schutzgas im unteren Bereich der Kammer, wie in der Figur durch den Verlauf der jeweiligen Pfeile angedeutet. Damit wird sowohl das Einkoppelfenster 10 vor Verunreinigung geschützt als auch ein flacher Strömungskanal für das seitlich zugeführte Schutzgas aufrechterhalten.
Das Einkoppelfenster bzw. der Querschnitt des erhöhten Bereiches können bei der erfindungsgemäßen Prozeßkammer eine Vielzahl von Formen aufweisen, beispielsweise eine runde, rechteckige oder vieleckige Form.

Bei der Verarbeitung des Werkstoffs Stahl werden beispielsweise Argon mit einem Volumenstrom von ca. 15 l/min seitlich und Helium mit 10 l/min von oben zugeführt. Mit dieser Anordnung wird auch bei einem Bauprozeß über mehrere Stunden die Verunreinigung des Fensters 10 verhindert und gleichzeitig die Wirkung des Schutzgasstroms auf den Bearbeitungsprozeß aufrecht erhalten.

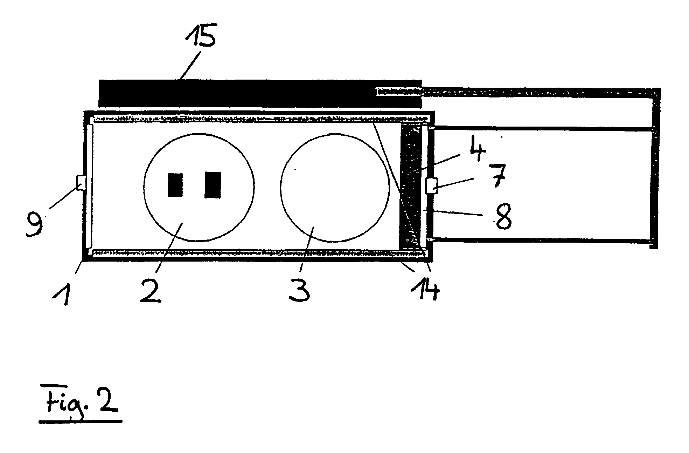

Figur 2 zeigt schließlich die gesamte Anordnung nochmals in Aufsicht. In dieser Figur sind neben dem Bauzylinder 2, dem Pulvervorratszylinder 3, dem Gaseinlaß 7, dem Verteiler 8 und dem Gasauslaß 9 für das seitlich zugeführte Schutzgas vor allem der Schieber 4 mit den zugehörigen Führungsschienen 14 und dem außerhalb der Prozeßkammer angeordneten Schieber-Antrieb 15 gut zu erkennen.

## Patentansprüche

1. Prozeßkammer für das selektive Laser-Schmelzen von Werkstoffpulver, bestehend aus
- einer geschlossenen Kammer (1) mit einer Bodenfläche, Seitenwänden und einer Deckfläche (6),
- einem Vorratsvolumen (3) und einem Aufbauvolumen (2), die unterhalb der Bodenfläche angeordnet sind,
- im Bereich der Seitenwände angeordneten ersten Einlaß- und Auslaßöffnungen (7, 9) für ein erstes Gas und
- einem für einzukoppelnde Laserstrahlung transparenten Einkoppelfenster (10),
**dadurch gekennzeichnet,**
**daß** in der Deckfläche (6) über dem Aufbauvolumen (2) ein erhöhter Bereich mit Seitenflächen vorgesehen ist, in dem das Einkoppelfenster (10) angeordnet ist, wobei in den Seitenflächen des erhöhten Bereiches zweite Einlaßöffnungen (13) für ein zweites Gas vorgesehen sind.

2. Prozeßkammer nach Anspruch 1,
**dadurch gekennzeichnet,**
**daß** der erhöhte Bereich rotationssymmetrisch ausgestaltet ist.

3. Prozeßkammer nach Anspruch 2,
**dadurch gekennzeichnet,**
**daß** der erhöhte Bereich zylinderförmig ist.

4. Prozeßkammer nach einem der Ansprüche 1 bis 3,
**dadurch gekennzeichnet,**
**daß** die zweiten Einlaßöffnungen (13) ringförmig um das Einkoppelfenster (10) angeordnet sind.

5. Prozeßkammer nach einem der Ansprüche 1 bis 4,
**dadurch gekennzeichnet,**
**daß** die ersten Einlaß- und Auslaßöffnungen (7, 9) in den Seitenwänden vorgesehen sind, wobei sich die Auslaßöffnungen (9) an den den Einlaßöffnungen (7) gegenüberliegenden Seitenwänden befinden.

6. Prozeßkammer nach einem der Ansprüche 1 bis 5,
**dadurch gekennzeichnet,**
**daß** die Summe der Querschnittsflächen der ersten Einlaßöffnungen (7) gleich der Querschnittsfläche einer Zuleitung des Schutzgases zu den Einlaßöffnungen (7) ist.

7. Verfahren zum Betrieb der Prozeßkammer nach einem der vorangehenden Ansprüche,
**dadurch gekennzeichnet,**
**daß** durch die ersten Einlaßöffnungen (7) ein erstes Gas als Schutzgas und durch die zweiten Einlaßöffnungen (13) ein zweites Gas eingeleitet wird, wobei das zweite Gas eine geringere Dichte als das erste Gas aufweist.

8. Verfahren nach Anspruch 7,
**dadurch gekennzeichnet,**
**daß** als zweites Gas Helium verwendet wird.

## Claims

1. Process chamber for selective laser fusion of material powders, consisting of
- a closed chamber (1) having a bottom area, side walls and a cover area (6),
- a reservoir volume (3) and a production volume (2), which are disposed underneath said bottom area,
- first inlet and outlet openings (7, 9) for a first gas, which are disposed in the region of said side walls, and
- a beam injection window (10) transparent to laser radiation to be coupled in,
**characterised in**
**that** a raised region with side areas is provided in said cover area (6) above said production volume, in which region said beam injection window (10) is disposed, with second inlet openings (13) being provided for a second gas in the side areas of said raised region.

2. Process chamber according to Claim 1,
**characterised in**
**that** said raised region presents a rotationally symmetric design.

3. Process chamber according to Claim 2,
**characterised in**
**that** said raised region has a cylindrical shape.

4. Process chamber according to any of the Claims 1 to 3,
**characterised in**
**that** said second inlet openings (13) are disposed in a circular configuration about said beam injection window (10).

5. Process chamber according to any of the Claims 1 to 4,
**characterised in**
**that** said first inlet and outlet openings (7, 9) are provided in said side walls, with said outlet openings (9) being located on the side walls opposite to said inlet openings (7).

6. Process chamber according to any of the Claims 1 to 5,
**characterised in**
**that** the sum of the cross-sectional areas of said first inlet openings (7) is equal to the cross-sectional areas of a feed duct for supply of said protective gas to said inlet openings (7).

7. Method of operating the process chamber according to any of the preceding Claims,
**characterised in**
**that** a first gas is introduced as protective gas through said first inlet openings (7) and a second gas is introduced through said second inlet openings (13), with said second gas having a density lower than that of said first gas.

8. Method according to Claim 7,
**characterised in**
**that** helium is used as said second gas.

## Revendications

1. Chambre de processus pour la fusion sélective par laser des poudres en matériau, constituée par
- une chambre fermée (1) ayant une aire de fond, des parois latérales et une aire de recouvrement (6),
- un volume de stockage (3) et un volume de constitution (2), qui sont disposés, tous les deux, au-dessous de ladite aire de fond,
- des premiers orifices d'admission et de sortie (7, 9) pour un premier gaz, qui sont disposés dans la zone desdites parois latérales, et
- une fenêtre d'alimentation de faisceau (10), qui est transparente au rayonnement laser à y introduire,
**caractérisée en ce**
**qu'**une zone exhaussée aux zones latérales est disposée dans ladite aire de recouvrement (6) au-dessus dudit volume de constitution, dans laquelle zone ladite fenêtre d'alimentation de faisceau (10) est disposée, aux deuxièmes orifices d'admission (13) étant formés pour un deuxième gaz dans les zones latérales de ladite zone exhaussée.

2. Chambre de processus selon la revendication 1,
**caractérisée en ce**
**que** ladite zone exhaussée présente une configuration à symétrie de révolution.

3. Chambre de processus selon la revendication 2,
**caractérisée en ce**
**que** ladite zone exhaussée a une configuration cylindrique.

4. Chambre de processus selon une quelconque des revendications 1 à 3,
**caractérisée en ce**
**que** lesdits deuxièmes orifices d'admission (13) sont formés en un arrangement circulaire autour de ladite fenêtre d'alimentation de faisceau (10).

5. Chambre de processus selon une quelconque des revendications 1 à 4,
**caractérisée en ce**
**que** lesdits premiers orifices d'admission et de sortie (7, 9) sont formés dans lesdites parois latérales, auxdits orifices de sortie (9) se trouvant sur les parois latérales opposées auxdits orifices d'admission (7).

6. Chambre de processus selon une quelconque des revendications 1 à 5,
**caractérisée en ce**
**que** la somme des aires en coupe transversale desdites premiers orifices d'admission (7) est égale à l'aire en coupe transversale d'un passage d'alimentation du gaz d'enveloppe auxdits orifices d'admission (7).

7. Procédé à opérer la chambre de processus selon une quelconque des revendications précédentes,
**caractérisé en ce**
**qu'**un premier gaz est introduit en tant que gaz d'enveloppe par lesdits premiers orifices d'admission (7), et qu'un deuxième gaz est introduit par lesdits deuxièmes orifices d'admission (13), ledit deuxième gaz ayant une densité plus basse que la densité dudit premier gaz.

8. Procédé selon la revendication 7,
**caractérisé en ce**
**que** de l'hélium est utilisé en tant que ledit deuxième gaz.
